# EUROPEAN PATENT APPLICATION

(11) **EP 0 971 221 A2**
(43) Date of publication of application: **12.01.2000**
(21) Application number: 99112842.2
(22) Date of filing: 02.07.1999
(51) Int. Cl.: G01M 3/24

(54) **Acoustic leak detection**

(30) Priority: 08.07.1998 GB 9814695; 25.06.1999 GB 9914865
(71) Applicant: ROKE MANOR RESEARCH LIMITED, Romsey, Hampshire SO51 0ZN (GB)
(72) Inventor: Richardson, Christopher Keith, East Wellow, Romsey, Hampshire SO51 6EX (GB); Mansbridge, John, Eastleih, Hampshire SO53 1FH (GB)
(74) Representative: Mackett, Margaret Dawn

(57) **Abstract**

Described herein is a method and apparatus for determining the location of a leak in a plastic pipe. A plastic pipe (10) located below ground level (12) includes at least one tag element (14, 16) which produces a modulated radio signal (34) when interrogated with a radio signal (32) from a detector unit (30) located above ground level (12). Each tag element (14, 16) includes a microphonic element which detects acoustic signals (40, 42) generated by a leak (44) and modulates the radio signal (32) in accordance with the strength of the received acoustic signals (40, 42). The detector unit (30) demodulates the modulated radio signal (34) to determine the location of the leak (44) relative to the tag elements (14, 16).

## Description

The present invention relates to improvements in or relating to leak detection, and is more particularly, although not exclusively, concerned with the detection of leaks using in-situ acoustic sensors.

In many industries which supply fluids, for example, the water supply industry, there is a need to reduce the leakage of fluid from buried pipes. However, in the past, it has often been difficult to locate and repair these pipes in a cost effective manner. Nowadays, such supply pipes are made from plastic materials which can be utilised as both new and replacement pipes. Pipes made from plastic materials have lower maintenance requirements and tend to be less prone to leakage in the first place. However, if such pipes leak, the conventional technique of utilising the acoustic noise generated by the leak itself as a means for identifying and locating these leaks has very limited performance. Moreover, plastic pipes can be difficult to detect and locate underground because the detectors used for metallic pipes are not sensitive to plastic materials.

Currently, the water supply industry uses a technique known as leak noise correlation when finding the location of a leak. This technique involves attaching acoustic sensors to the pipe in which a leak is suspected. The sensors are attached at suitable points where access to the pipe can easily be gained through an inspection hatch or by a stop-cock. In order for the technique to work, sensors must be placed either side of the leak. The leak produces a 'hiss' as the water under pressure passes through the hole. This sound is propagated both ways along the pipe at a speed determined by the properties of the water and the pipe. The sound signals detected at the two points are transmitted (often as radio signals) to a central processor which uses a cross-correlation technique to determine the relative delay of one signal with respect to the other. The relative position of the leak in the pipe is then calculated having assumed a value for the speed of sound in the water-filled pipe. The course of the pipe is then followed using a metal detector in the case of a metal pipe or using pipe maps in the case of a non-metallic pipe. The pipe is then uncovered to investigate and repair the leak. The uncovering of the pipe can be expensive and may cause substantial disruption and as a consequence may be incur additional expense if the inferred position of the leak is incorrect.

An important factor in the effectiveness of the technique described above is that the sound is attenuated as it propagates. This attenuation generally increases as the frequency increases. In addition, the attenuation is strongly dependent on the material from which the pipe is formed. Pipes made from hard material, such as iron and steel, have relatively low attenuation and the detection of leaks can be made with transducers separated by hundreds of metres. In a typical urban environment, the separation of suitable transducer attachment points will be less than this, and therefore this technique is an effective means of localising leaks accurately enough to ensure that the minimum amount of digging needs to be done.

However, the attenuation in plastic pipes is very much stronger and as a result acoustic detection techniques have a much shorter range. This means that the technique will either give results that are not sufficiently accurate or will give no results at all if the leak is in a pipe which has widely separated access points. It will be appreciated that this will have a severe impact on the costs and time scales for fixing the leak. Furthermore, pipes made from plastic materials are more difficult to detect even if the position of the leak in relation to the pipe joints is known. Moreover, if the pipe mapping information is inaccurate or incomplete, it may not be possible to locate the precise position of the leak in the first place.

GB-A-2 289 602 discloses a system which addresses the problem associated with pipe mapping information. In GB-A-2 289 602, non-liner elements are embedded in or attached to plastic pipes. These non-liner elements can be detected from above ground by a non-linear junction detector, and, in effect, comprise 'tags' for the pipe. The 'tags' are located at regular known intervals along the length of the plastic pipe, and a mobile plastic pipe detector unit above the ground is used to detect the location of the pipe from the position of the 'tags'. The detector unit transmits a radio signal in the form of a beam to the 'tags' underground. The radio signal interacts with the non-linear element in the 'tag' to generate a harmonic signal which is transmitted and propagated towards to the surface where its strength is detected by the detector unit. The strength of a signal received from a 'tag' is likely to be very much greater than that received from other buried objects, and hence the detection of the 'tag' and the pipe is facilitated. This technique is sufficiently sensitive that it is easier to trace the course of plastic pipes than to trace metal pipes using convention metal detection techniques.

In accordance with one aspect of the present invention, there is provided a tag element for a pipe for receiving a radio signal and for converting the radio signal into a modulated radio signal, characterised in that the tag element further comprises a microphonic element which modulates the radio signal in accordance with a detected acoustic signal.

The modulated radio signal may comprise a modulated harmonic of the radio signal. In this case, the tag element comprises a non-linear element.

The term 'harmonic' is intended to include the fundamental (or first harmonic) of the radio signal as well as multiple frequencies thereof.

In one embodiment, it is preferred that the modulated harmonic comprises the modulated fundamental of the radio frequency.

The microphonic element may comprise a parallel plate capacitor whose capacitance varies in accordance with the detected acoustic signal.

In accordance with another aspect of the present invention, there is provided a method of detecting a leak in a pipe including at least one tag element as described above, the method comprising:- transmitting a radio signal to the tag element; receiving a modulated radio signal back from the tag element; and detecting the modulated radio signal; characterised in that the method further comprises demodulating the modulated radio signal to determine the location of the leak.

In one embodiment of the present invention, a radio signal is transmitted to two tag elements and the modulated radio signals generated by each tag element are detected and demodulated. A leak noise correlator unit may be used to determine the location of the leak between the two tag elements.

In accordance with a further aspect of the present invention, there is provided apparatus for detecting the location of a leak in a plastic pipe, the system comprising:- a plastic pipe including a plurality of tag elements as described above; and at least one detector unit for transmitting radio signals to the tag elements and for receiving modulated radio signals therefrom, the detector unit demodulating the modulated radio signal to determine the location of the leak.

In one embodiment of the present invention, two detector units are used to interrogate two tag elements either side of a leak. A leak noise correlator unit for determining the position of the leak.

For a better understanding of the present invention, reference will now be made, by way of example only, to the accompanying drawings in which:-
Figure 1 illustrates one embodiment of an arrangement for combined pipe and leak detection;
Figure 2 illustrates another embodiment of an arrangement for combined pipe and leak detection;
Figure 3 illustrates a block diagram of a 'tag'; and
Figure 4 illustrates a microphonic capacitor used to modulate harmonic generation in the 'tag' shown in Figure 3.

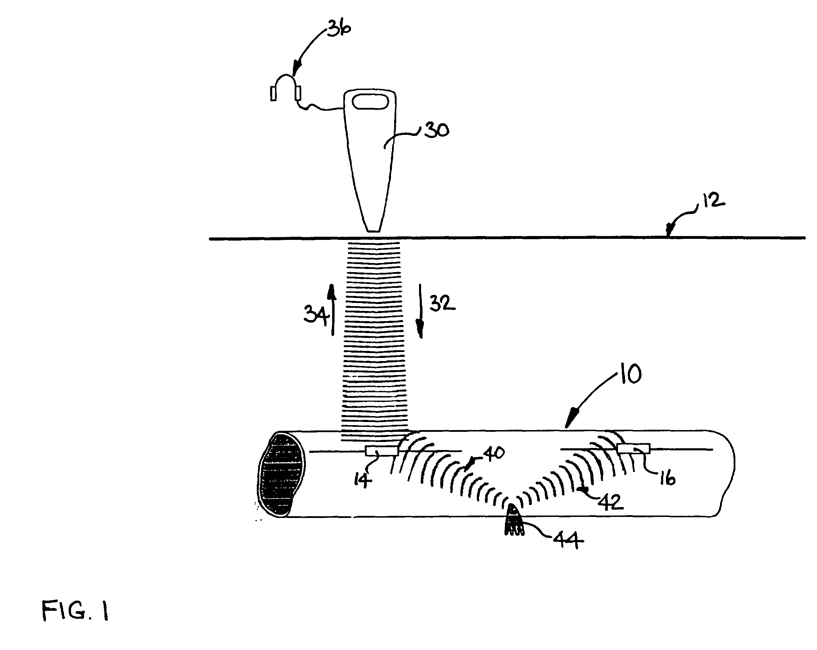

In Figure 1, a section 10 of a plastic pipe located below ground level 12 is shown. The section 10 includes two 'tags' 14, 16 as shown. The 'tags' 14, 16 are similar to those disclosed in GB-A-2 289 602 and each includes a non-linear element which generates harmonics when receiving a radio signal from a detector unit. As described in GB-A-2 289 602, a detector unit 30 transmits a radio signal 32 in the form of a beam to the 'tags' 14, 16 in section 10 of the pipe underground. (In Figure 1, the detector unit 30 is shown transmitting the radio signal 32 to 'tag' 14 as it is nearer to the detector unit 30 than 'tag' 16.) The radio signal 32 interacts with the nonlinear element in the 'tag' to generate a harmonic signal 34 which is transmitted and propagated towards to ground level 12 where the strength of the harmonic signal 34 is detected by the detector unit 30. An operator (not shown) of the detector unit 30 may use headphones 36 to listen to the harmonic signal returned to the detector unit 30 from the 'tags' 14, 16.

In accordance with the present invention, each 'tag' 14, 16 also includes a microphone (not shown) which detects acoustic signals 40, 42 generated by a leak 44. The acoustic signals 40, 42 are propagated towards respective ones of 'tags' 14, 16 through the material from which the pipe is made or through the fluid flowing in the pipe. The acoustic signals 40, 42 generated by the leak 44 modulate the harmonic signal 34 generated by the interaction of the non-linear element in each 'tag' 14, 16, and the acoustic signals 40, 42 appear as a modulation, typically amplitude modulation, of the harmonic radio signal 34 radiated by the 'tag' 14. (Only the radio signal 32 from the detector unit 30 towards the 'tag' 14 and the harmonic signal 34 from the 'tag' 14 to the detector unit 30 are shown for clarity. However, it will readily be appreciated that radio signals from the detector unit will also reach other 'tags', for example, 'tag' 16, in the vicinity but these will be at lower power due to the beam shape or to the greater separation between the detector unit and the 'tag'.) As the 'tag' 14 is close to the leak 44, the effects of attenuation are minimal and the received acoustic signal is relatively strong.

The modulated harmonic signals including the harmonic signal 34 from 'tag' 14 are detected above ground by the detector unit 30 and demodulated. The strength of the acoustic signal 40 carried by the harmonic signal 34 is indicated on the detector unit 30. In this way, the 'tag' with the strongest acoustic signal can be determined thereby indicating the 'tag' which is closest to the location of a leak.

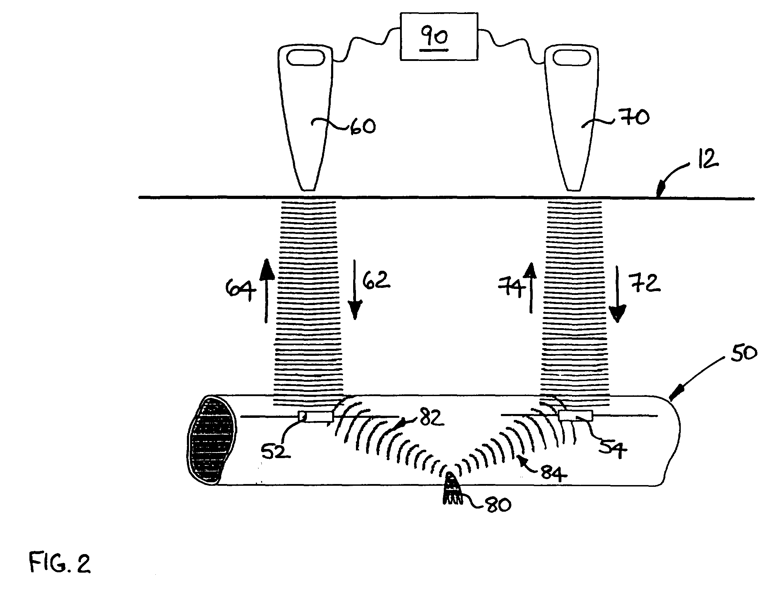

For greater accuracy, two detector units can be used to interrogate separate 'tags' so that any leaks can be detected more accurately. Figure 2 illustrates such an arrangement.

In Figure 2, a section 50 of plastic pipe is shown located below ground level 12. As described with reference to Figure 1, the section 50 includes two 'tags' 52, 54 each comprising a non-linear element and a microphone as described above. A pair of detector units 60, 70 are located above ground level 12 and each sends radio signals 62, 72 towards section 50 of the pipe. Each 'tag' 52, 54 generates a harmonic signal 64, 74 which is received by respective ones of the detector units 60, 70. As described with reference to Figure 1, a leak 80 in the section 50 of the pipe generates acoustic signals 82, 84 which are received by respective ones of the 'tags' 52, 54 as shown. The harmonic signals 64, 74 are modulated in accordance with the acoustic signals 82, 84.

The modulated harmonic signals 64, 74 are received at the detector units 60, 70 and are passes to a leak noise correlator unit 90. The position of the leak 80 in the section 50 of the pipe can be determined with considerable accuracy by the noise correlator unit 90.

The arrangement described with reference to Figure 2 not only gives the required accuracy as the 'tags' can be placed much closer together than the typical spacing of access points on pipes, but also saves time as transducers do not have to be connected to the pipe. Furthermore, the entire leak detection process can be carried out from above ground.

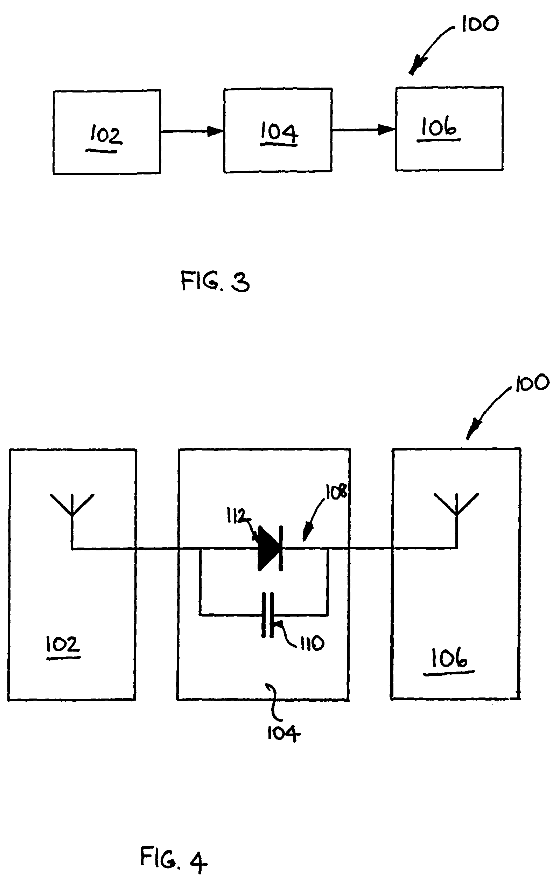

In each 'tag' 14, 16, 52 and 54, the microphone allows the acoustic signals to modulate the conversion efficiency of the harmonic generation process. A 'tag' is schematically illustrated in Figure 3.

In Figure 3, a 'tag' 100 comprises a receiving antenna 102, a harmonic generator 104 and a transmitting antenna 106. The receiving antenna 102 couples the radio signal transmitted by a detector unit into the 'tag'. The received signal is then applied to the harmonic generator 104, containing a non-linear element (not shown), to convert some of the received signal into a higher harmonic of the signal. The higher harmonic signal is then applied to the transmitting antenna 106. Normally, the receiving antenna 102 and the transmitting antenna 106 are implemented in the same antenna device.

A microphone element is implemented by incorporating electronic elements into the 'tag'. For example, the electronic element can comprise a parallel plate capacitor as shown in Figure 4. In Figure 4, the 'tag' 100 is shown with the harmonic generator 104 including an electronic element 108. In one embodiment, the electronic element 108 comprises a parallel plate capacitor 110 connected in parallel with non-liner element 112. The capacitance of the capacitor 110 is modulated by allowing the gap between the plates to be controlled by the received acoustic signal. A capacitor affected in this way is termed 'microphonic'. By placing the capacitor 110 in parallel with the non-linear element 112, some of the signal by-passes the non-linear element 112 and reduces the overall efficiency of the harmonic generator 104. It will readily be understood that an acoustic signal will vary the capacitance of the capacitor 110 and will modulate the efficiency of the harmonic generator 104 in proportion to the level of the acoustic signal.

However, in a further embodiment of the present invention (not illustrated), the microphone element in the 'tag' modulates the fundamental of the radio signal for re-transmission. This means that the receiver is tuned to the same frequency as that which is transmitted. The microphone operates as before but the non-liner element is no longer required in carrying out the modulation of the radio signal.

It will be appreciated that although the non-linear element is no longer required for modulation, that is, to produce a modulated harmonic signal which is not the fundamental, it may still be useful for facilitating detection and/or identification of a pipe to which the 'tag' is attached. The technique described above can be used in addition to or instead of by-passing or changing the tuning of the receiving and/or transmitting antennae.

It will readily be appreciated that the electronic element 108 could comprise other 'microphonic' elements. For example, the microphonic element may be an inductor or a resistor. In these cases, the inductance or resistance varies in accordance with a detected acoustic signal.

Different 'tag' types can be allocated to different utilities, such as, water, gas, sewage, telecommunications and cable, to allow ease of identification and location, each 'tag' type operating on selected different frequencies and being designed to provide a well-defined ratio between the power returned from the various frequencies.

The microphone described above is a passive microphone. However, it may be the case tat the sensitivity of the microphone is limited. If this is the case, it may be possible to use some of the power received from the radio signal transmitted by the detector unit to power an electronic circuit, for example, an amplifier.

A digital code generator could be incorporated into the 'tag', and some of the received power is convened into electrical power. The code would then be used to modulate the harmonic power using a carrier frequency above the frequency range of the acoustic spectrum to enable the measurement of leak noise to continue. The code would allow the unique identification of the 'tag'.

Although the 'tags' have been described as measuring acoustic signals, it may be possible to modify them to measure other physical parameters, such as, pressure, temperature, flow rate and even chemical concentrations.

## Claims

1. A tag element for a pipe for receiving a radio signal and for converting the radio signal into a modulated radio signal, characterised in that the tag element further comprises a microphonic element which modulates the radio signal in accordance with a detected acoustic signal.

2. A tag element according to claim 1, wherein the modulated radio signal comprises a modulated harmonic of the radio signal.

3. A tag element according to claim 2, wherein the modulated harmonic comprises the modulated fundamental of the radio signal.

4. A tag element according to claim 2, further comprising a non-linear element.

5. A tag element according to any one of the preceding claims, wherein the microphonic element comprises a parallel plate capacitor whose capacitance varies in accordance with the detected acoustic signal.

6. A tag element according to any one of claims 1 to 4, wherein the microphonic element comprises an inductor whose inductance varies in accordance with the detected acoustic signal.

7. A tag element according to any one of claims 1 to 4, wherein the microphonic element comprises a resistor whose resistance varies in accordance with the detected acoustic signal.

8. A tag element according to any one of the preceding claims, further including a digital code generator for generating a unique identification of the tag element.

9. A method of detecting a leak in a pipe including at least one tag element according to any one of the preceding claims, the method comprising:
transmitting a radio signal to the tag element;
receiving a modulated radio signal back from the tag element; and
detecting the modulated radio signal;
characterised in that the method further comprises demodulating the modulated radio signal to determine the location of the leak.

10. A method according to claim 9, wherein a radio signal is transmitted to two tag elements and the modulated radio signals generated by each tag element are detected and demodulated.

11. A method according to claim 10, wherein a leak noise correlator unit is used to determine the location of the leak between the two tag elements.

12. Apparatus for detecting the location of a leak in a plastic pipe, the system comprising:
a plastic pipe including a plurality of tag elements according to any one of claims 1 to 8; and
at least one detector unit for transmitting radio signals to the tag elements and for receiving modulated radio signals therefrom, the detector unit demodulating the modulated radio signal to determine the location of the leak.

13. Apparatus according to claim 12, wherein two detector units are used to interrogate two tag elements either side of a leak.

14. Apparatus according to claim 13, further including a leak noise correlator unit for determining the position of the leak.

15. A plastic pipe including at least one tag element according to any one of claims 1 to 8.

16. A tag element substantially as hereinbefore described with reference to Figures 3 and 4 of the accompanying drawings.

17. A method for detecting the presence of a leak in a plastic pipe substantially as hereinbefore described with reference to Figures 1 and 2 of the accompanying drawings.

18. Apparatus for detecting the presence of a leak in a plastic pipe substantially as hereinbefore described with reference to the accompanying drawings.
